# EUROPEAN PATENT SPECIFICATION

(11) **EP 3 480 048 B1**
(45) Date of publication and mention of the grant of the patent: **29.04.2020**
(21) Application number: 17306527.7
(22) Date of filing: 03.11.2017
(51) Int. Cl.: B60K 15/077

(54) **TANK TUBE BRACKET FOR A TANK WITH A DIVERTED DISCHARGE OPENING**
BEHÄLTERROHRHALTERUNG FÜR EINEN BEHÄLTER MIT UMGELEITETER AUSLASSÖFFNUNG
SUPPORT DE TUBE DE RÉSERVOIR POUR UN RÉSERVOIR AYANT UNE OUVERTURE D'ÉVACUATION DÉVIÉE

(43) Date of publication of application: 08.05.2019
(73) Proprietor: MEAS France, 31027 Toulouse Cedex 3 (FR)
(72) Inventor: LEGER, Vincent, 31200 Toulouse (FR); MATHIEU, Loic, 32600 Pujaudran (FR); GAUNARD, Florent, 31500 Toulouse (FR); CASTANDET, Armand, 31500 Toulouse (FR)
(74) Representative: Grünecker Patent- und Rechtsanwälte PartG mbB

(56) References cited:
- WO-A1-89/07712
- DE-A1- 4 123 367
- DE-B1- 2 602 234
- GB-A- 2 172 864

## Description

The invention relates to a tank tube bracket for a tank, in particular a diesel or a reactive-fluid tank, such as a urea tank, which comprises a receptacle for receiving the tank tube, the receptacle extending along an axis, and a passage for passing fluid through the bracket, wherein the passage is directed towards the axis at a distal end of the passage.

Tank tubes used for these kind of tanks include but are not limited to vent tubes for venting the tank, suction tubes for pumping fluid out of the tank, tubes comprising a fluid level meter, and tank tubes which may be used to cool and/or heat the fluid. The tank tubes, when installed, reach preferably vertically into the tank and may even reach into the fluid in the tank. The tank tubes may be held by a tank/pump interface which provides connections to the tank tubes and may at the same time serve as a cover for an access opening of the tank.

In many applications, such as in combustion engines, the fluid is pumped from the tank to a consumer device, such as the combustion engine. In order to secure a sufficient supply of fluid to the consumer device at all time, more fluid is pumped to the consumer device than is actually needed. Excessive fluid, which is not consumed, is discharged back into the tank.

Often, the tank is provided with a sensor device, which may be used for determining fluid quantity and/or fluid quality. The proper functioning of the sensor device may be impaired by the presence of air bubbles in the stream. The air bubbles may be introduced by the excessive fluid which is led back to the tank.

DE 41 23 367 A1 discloses an assembly for conveying a fluid in a tank with an electrical fuel pump. The fuel pump sucks in the fuel through a filter from a reservoir. A jet pump is provided to pump fuel from the tank into the reservoir, wherein the tank and the reservoir are connected to one another via a check valve, which is opened if the level of the fuel in the tank is higher than in the reservoir and closed if the level of the fuel in the reservoir is higher than in the tank.

The present invention aims to provide a solution for guiding fluid back into the tank without introducing too many air bubbles which may impair the working of the sensor device.

According to the invention, this object is solved by a tank tube bracket as defined by the features of claim 1 as mentioned initially, wherein a tank tube is received in the receptacle, the tank tube extending in front of the distal end of the passage.

The passage may either itself form a fluid line or may be used to receive a fluid line. In operation, discharge fluid from a pump may flow through the passage and out of its distal end back into the tank. By directing the passage towards the axis at the distal end, it is possible to direct the discharged fluid onto the tank tube and thus allow it to flow down the tank tube back into the fluid in the tank without introducing air bubbles. Further, by directing the passage at the distal end towards the first axis, the fluid is not directed to a spot directly underneath the tank tube bracket when the latter is installed in a tank. Thus, the fluid exiting from the distal end may be directed away from a sensor device located in the tank, e.g. against a wall of the tank or against the tank tube. This avoids the creation of bubbles right above the sensor device which may impair the function of the sensor device. Finally, if the tank tube is a heating tube, the contact of the fluid discharged from the distal end leads to an efficient heat transfer.

This allows to direct the fluid flow exiting the distal end onto the tank tube. In operation of the tank tube bracket, a fluid stream may be provided exiting from the distal end.

The invention may be further improved by providing one or more of the following features, of which each has its own technical effect and may be added independently of any other additional features.

To allow for deaerating and heating, the fluid stream is preferably at least partly directed to the tank tube and directed away from the receptacle. Further, the fluid stream may be directed away from a sensor device located in the tank, so from an area vertically above the sensor device. The discharged fluid may flow down the tank tube, thereby releasing bubbles. Moreover, flowing down the tank tube and thus re-entering the fluid in the tank leads to less disturbances and inclusion of air bubbles in the surface than a free stream falling down from the distal end. The tank tube may be a vent tube, a tube for measuring fluid level, a suction tube or a heating tube. Preferably, the tank tube is a heating tube, so that a heat transfer may take place from the heating tube to the fluid flowing down the heating tube.

The tank tube may cross a virtual linear extension of the passage past the distal end. This means that if the passage would continue linearly past the distal end, it would intersect the tank tube. This further ensures that the fluid stream exiting the distal end will hit the tank tube.

It may be further preferred that the tank tube is spaced apart from the distal end less than one diameter of the passage. This is particularly advantageous if the exit velocity of the fluid flow is low. If the exit velocity is very low, the tank tube may even be spaced apart from the distal end less than one wall thickness of the passage. This ensures that the flow exiting the distal end stays attached to the tank tube even at very low exit velocities.

To allow only a small distance between the distal end and the tank tube, the distal end may be provided with a bevel which accommodates the tank tube.

The distal end may also be formed complementary to the outer contour of the tank tube opposite the distal end. This allows a snug fit between the distal end and the tank tube, allowing for a small and constant or almost constant gap between the distal end of the tank tube, where the gap allows the fluid to exit from the distal end.

It is to be noted that the fluid flow exiting the distal end may also be discharged against a wall instead of against the tank tube. In this case, all the above statements may apply equally to the wall instead of the tank tube. For example, the wall of the tank may be less than one diameter of the passage or even less than one wall thickness of the passage away from the distal end. The bevel may be used to accommodate the wall of the tank close to the distal end.

The tank tube and/or the wall of the tank may be located opposite the distal end and, except for a gap, cover the distal end. The gap may in particular be located at the lower edge of the distal end. The gap may provide a radial opening to the passage and/or extend at least partially in a circumferential direction around the gap. In any of these embodiments, the gap is used to allow the water to exit the distal end and to flow down the tank tube.

Whereas the distal end of the passage may be directed towards the first axis, a proximal end of the passage may extend parallel to the receptacle, the proximal end being located opposite the distal end. This is particularly useful if, for example, filters are to be inserted into the proximal end of the passage, because the filter insertion direction and the direction in which the tank tube may be inserted into the receptacle are the same, reducing the need for handling space.

The passage may comprise an elbow between the distal and the proximal end. The elbow allows to redirect the flow in the passage towards the tank tube. At the elbow, the passage may have a corner or may be curved. The flow diversion is preferably larger than 90° in order to avoid aeration of the fluid due to flow separation.

Between the distal end and the elbow and/or the proximal end and the elbow, the passage may be straight, to create as few flow perturbations as possible. Further, a straight section facilitates insertion of additional components into the passage, such as a filter or a lining tube.

The tank tube bracket may, in another embodiment, comprise a housing, which forms at least part of the receptacle and the passage. The housing may constitute a thermal bridge between the receptacle and the passage, thus allowing heat transfer between the receptacle and the passage. For example, the housing may be formed from a material which contains or consists of a metal such as aluminum, iron, copper and/or tin. This is particularly useful if a heating tube is received in the receptacle.

The housing may comprise a flat section which may extend between the proximal end, the elbow and the distal end.

The housing may, at least partially, be made of two halves, which are divided in a plane, which crosses at least one, preferably both of the passage and the receptacle.

If the housing is made of metal, not only a thermal bridge, but also mechanical strength is provided.

In another embodiment, part of the housing may be made from a monolithic moulded part, e.g. from moulded metal or from moulded resin material, in which the passage is formed as a fluid-tight channel. Such a housing part may be manufactured at low cost in high quantities. In order to combine this with a mechanically strong bracket and a thermal bridge, the moulded housing part may be joined to a metal housing part. In order to avoid leakages at the joining of the housing parts, an insert such as an air bubble filter and/or an adapter may bridge the dividing line between the two housing parts in a fluid-tight matter, e.g. by providing an inner tube which is inserted into the passage and abuts sealingly both the different parts of the housing.

The passage may in particular comprise a filter section for receiving an air bubble filter in order to remove air bubbles from the fluid flow through the passage. The bubble filter may be located in and extend along a straight section of the passage between the proximal end and the elbow. The air bubble filter may extend into the elbow. The tube which clads and seal the junction of housing part may, in another advantageous embodiment, be part of the air bubble filter.

The invention also relates to a fluid tank, such as a diesel or a reactive fluid tank comprising a tank tube bracket in any of the above embodiments.

The tank may be provided with a tank/pump interface at one of its sides and the tank tube bracket may be mounted to the tank/pump interface and/or the tank tube. The tank/pump interface may comprise a cover for the tank and also provide a suction line for sucking fluid out of the tank. Further, the tank/pump interface may comprise a support for a fluid level sensor. In an alternative embodiment, the tank tube bracket is not mounted to the tank/pump interface but to the tank tube via the receptacle. For this, the receptacle may form a clip.

In the tank, e.g. on its bottom, a sensor device may be placed. It is preferred that the distal end of the passage points away from the sensor. Thus, any fluid discharged from the distal end does not hit the surface of the fluid above the sensor. Furthermore, the distal end of the passage and/or the tank tube may not be located vertically above the sensor. Also, no part of the tank tube between the distal end of the passage and the fluid may be located above the sensor device. All these embodiments individually avoid the introduction of air bubbles close to the sensor device as the discharged fluid cannot hit the surface of the fluid in the tank above the sensor device. The sensor device may be a fluid quality and/or quantity sensor.

The distal end may also be directed to a wall of the tank as has been explained above.

Further, the invention relates to a pump assembly comprising a pump and a tank tube bracket according to any of the above-described embodiments. The passage of the tank tube bracket may be connected to a discharge opening of the pump.

An adapter may be provided, which is inserted into the passage and extends out of the distal end of the bracket. In particular, the adapter may abut the air bubble filter forming a circumferential seal. Such an adapter can be used to connect the passage to e.g. a fluid line. Use of such an adapter allows to split the housing into two halves as described above without any leakage problems.

In the following, embodiments of the invention are exemplarily described with reference to the drawings. Throughout the drawings, the same reference numerals are used for elements that correspond to each other with respect to function and/or design.

The combination of features in each of the embodiments can be altered. For example, a particular feature can be omitted if its technical effect is not relevant for a specific application. Vice versa, a feature can be added to an embodiment if its technical effect as explained above is beneficial in a particular application.

In the drawings:
- Fig. 1: shows a schematic rendition of an assembly comprising a pump, a tank and a tank tube bracket;
- Fig. 2: shows a schematic rendition of the tank tube bracket of Fig. 1;
- Fig. 3: shows a schematic rendition of a variant of a tank tube bracket;
- Fig. 4: shows a schematic cut view of the tank tube bracket of Fig. 3.

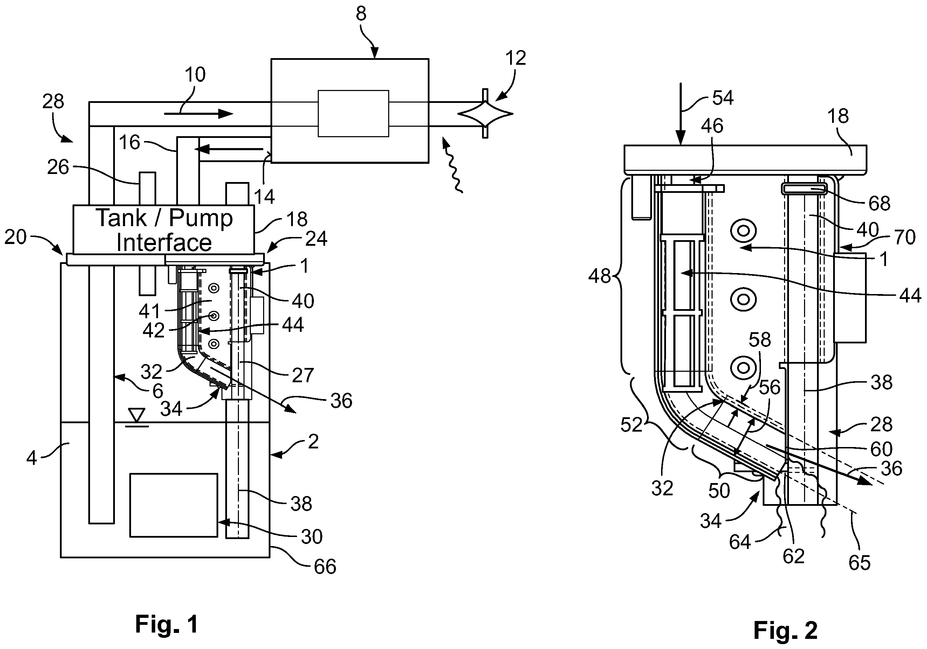

First, the design and function of a tank tube bracket 1 according to the invention is explained with reference to Fig. 1. The tank tube bracket 1 as exemplarily shown in Fig. 1 is used in a tank 2 which may contain a fluid 4 such as a reactive fluid such as urea or a combustion fluid such as diesel. The fluid 4 is pumped from the tank 2 via a suction line 6 by a pump 8 as exemplified by arrow 10 which depicts the flow direction. The fluid 4 is pumped by the pump 8 to a consumer device 12, for example, an internal combustion engine. In order to ensure a sufficient supply of fluid 4 to the consumer device 12 at all times, the pump 8 may convey more fluid than the consumer device 12 actually consumes. Thus, excess fluid needs to be pumped back into the tank 2 from a discharge outlet 14 of the pump 8 via a discharge line 16. In such a configuration, the pump 8 actually comprises two circuits, one including the tank 2 and the other including the consumer device 12.

The tank 2 may be provided with a tank/pump interface 18 which may close at least one part of a side 20 of the tank 2 and which in particular may be configured as a cover 22 closing and sealing an access opening 24 of the tank 2. The tank/pump interface 18 provides support for the suction line 6, the discharge line 16, a vent tube 26 and a heating tube 27, which are continuously denominated as tank tube 28 in the following. The heating tube 27 may not necessarily be used for heating the fluid 4 but also may be used for cooling the fluid 4. The tank/pump interface 18 provides connections to these devices and possibly other components, which are located in the tank 2, such as a sensor device 30 for determining the quantity and/or quality of the fluid 4 in the tank 2. The quality of the fluid 4 may e.g. be determined to make sure that the fluid 4 in the tank 2 conforms to operational or legal conditions. The quantity of the fluid 4 may be used to determine when the tank 2 needs to be refilled. It is only for exemplary purposes that the bracket 1 is shown mounted to the heating tube 27.

The function of the sensor device 30 may be impaired by the presence of bubbles in the fluid 4. Therefore, the tank tube bracket 1 is configured according to the invention to avoid or at least reduce the introduction of bubbles in the fluid 4 by the fluid which is led back into the tank through the discharge line 16. At the same time, the tank tube bracket 1 may provide a thermal bridge between the tank tube 28 and the discharge line 16, which is particularly useful if the tank tube 28 is a heating tube.

The discharge line 16 continues within the tank tube bracket 1 in a passage 32 having a distal end 34 from which the fluid 4 is discharged into the tank 2 as a fluid stream 36. As can be seen in Fig. 1, the passage 32 is directed towards the tank tube 28. The tank tube 28 is at least partly received in a receptacle 40.

The receptacle 40 may be used to mount the heating bracket 1 onto the tank tube 28, to mount the tank tube 28 onto the tank tube bracket 1 and/or to create a contact between the tank tube bracket 1 and the tank tube 28 e.g. to allow heat transfer between the two. To this end, the tank tube bracket 1 is preferably made at least partly from thermally conductive material, e.g. a material consisting of or containing a metal such as aluminum, iron, copper and/or tin. Thus, heat is transferred from the tank tube 28 to the passage 32 and from there to the fluid 4 in the passage 32.

The tank tube bracket 1 may be a monolithic moulded part or may consist of two or more pieces, which are held together by fixing elements 42, such as rivets or bolts. According to one exemplary embodiment, two halves, of which the dividing plane may cross both the passage 32 and the receptacle 40, may be joined by the fixing elements 42.

As can be seen from Fig. 1, the distal end 34 is preferably not located directly above the sensor device 30. Thus, any fluid dripping from the distal end 34 into the fluid 4 at the bottom of the tank 2 does not create bubbles in the sensitive area directly above the sensor device 30. Moreover, the fluid stream 36 is directed away from the sensor device 30 or, respectively, from the area vertically above the sensor device 30. In the embodiment as shown, the fluid stream 36 is directed onto the tank tube 28, so that it flows down the tank tube 28 into the fluid 4 at the bottom of the tank 2. This flow leads to an improved deaeration of the fluid 4. It further smoothes the entry of the discharge fluid 4 into the tank 2. Each of these effects alone already decreases the occurrence of bubbles in the fluid tank 2.

If the tank tube 28 is a heating tube, the flow along the tank tube 28 in addition both heats or cools the discharged fluid 4 to the desired temperature.

Further, to decrease the number of bubbles, in particular of microbubbles, an air bubble filter 44 may be inserted into the passage 32.

The structure and function of the tank tube bracket 1 are further explained with reference to Fig. 2. The fluid 4 from the discharge outlet 14 enters the passage 32 at a proximal end 46 which is opposite the distal end 34. The distal end 34 is located adjacent to the tank/pump interface 18. At the distal end 34, the passage 32 and the receptacle 40, in particular the axis 38 of the receptacle 40, may be parallel to each other. A straight section 48 of the passage 32 may end at the proximal end 46. The air bubble filter 44 may be received in the straight section 48.

A (further) straight section 50 may end at the distal end 34. The straight section 50 at the distal end 34 determines the direction in which the fluid stream 36 of the fluid 4 is discharged from the distal end 34. Between the straight sections 48, 50, an elbow 52 which may either be curved or comprise a corner, may be located. Due to the elbow 52, the direction 36, from which the fluid emanates from the distal end 34 is different from a direction in which fluid 4 enters the passage 32 at the proximal end 46. The smaller angle between the direction of the fluid stream 36 and 54 is preferably larger than 90°, and may be around 120°.

The tank tube 28 extends in front of the distal end 34 of the passage 32 and may in particular be spaced apart from the distal end 34 less than one diameter 56 of the passage 32 at the distal end 34, in particular less than one material thickness 58 of the passage 32. The tank tube 28 may be located so close to the distal end 34 that a bevel 60 at the distal end 34 is necessary to accommodate the tank tube 28. Only a gap 62 having a width of less than half a diameter 56 may be provided preferably at the lower part of the distal end 34 for the fluid 4 to exit. This makes sure that the fluid 4 exits the distal end 34 in a flow 64 down the tank tube 28.

In order to ensure that the fluid stream 36 which exits the distal end 34, a virtual linear extension 65 of the passage 32 past the distal end 34 may cross the tank tube 28, on the virtual extension of the receptacle 40 along axis 38.

In a modification to what is shown in Figs. 1 and 2, a wall 66 (Fig. 1) of the tank 2 may be located in front of the distal end 34 right where the tank tube 28 is located in Figs. 1 and 2. In this variant, the fluid 4 from the distal end 34 will hit the wall 66 and flow down the wall 66. This avoids bubbles, but of course does not affect the heat transfer as is the case when the fluid 4 flows down the tank tube 28.

As can be further seen from Fig. 2, a form fit connection 68 may be formed between the tank tube bracket 1 and the tank tube 28, so that the heating bracket 1 is fixed both in the direction along axis 38 and perpendicular thereto. Further, the receptacle 40 may not completely enclose the tank tube 28 but provide a clamp with a slot 70 extending along the axis 38, so that the tank tube bracket 1 may be clipped onto the tank tube 28. The form fit 68 may comprise a collar on the tank tube which is received in a complementary opening of the bracket 1.

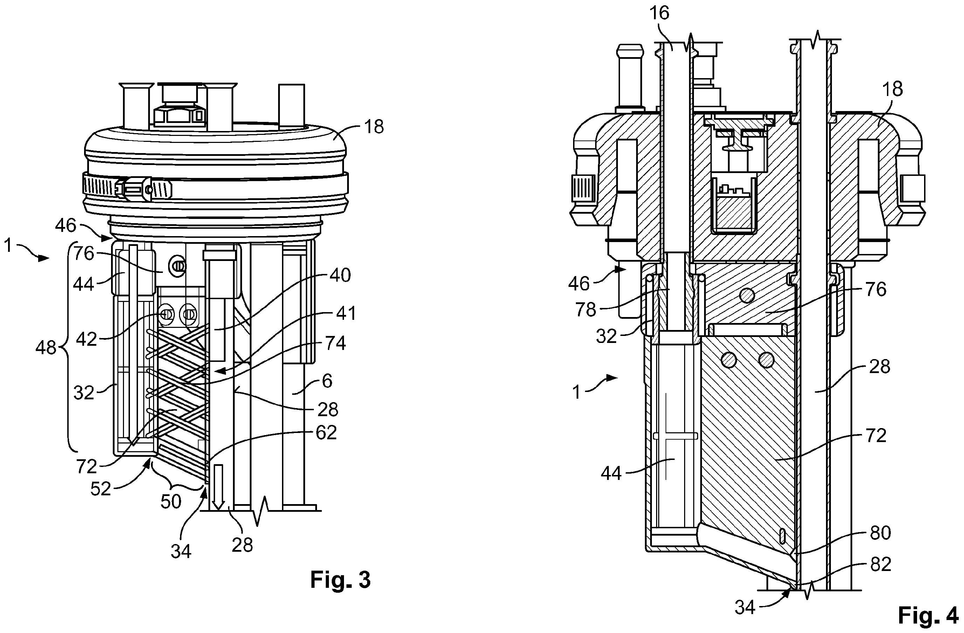

Fig. 3 shows a variant of the tank tube bracket 1. Only the differences to the embodiment shown in Figs. 1 and 2 are described in the following. Otherwise, full reference is made to the preceding text.

In the variant of Fig. 3, the elbow 52 is not curved, but comprises a corner. The distal end 34 does not have a bevel 60 but ends in a shape which is complementary to the outer surface or contour of the tank tube 28. Thus, the gap 62 between the distal end 34 and the tank tube 28 may be at least almost constant. The distal end 34 may in particular end in a vertical opening.

The housing 41 of tank tube bracket 1 according to Fig. 3 comprises a first housing part 72, which in particular may be the lower housing part. The housing part 72 may be a monolithic unit, in which the passage 32 is formed. The part 72 may be moulded or cast unitarily from a resin or metal material or a combination of both. A stiffening structure 74 may be used to increase mechanical strength. Part of the receptacle 40 may be formed in the part 72.

The part 72 may be attached to another part 76 by fixing elements 42. Whereas the part 72 which monolithically forms passage 32 may be at the distal end 34, part 76 may form the proximal end 46. Part 76 may be put together from two halves as has been described in Fig. 1 and in particular may comprise the form fit 68. Part 76 is primarily used for heat transfer and stability, whereas part 72 is used for forming passage 32 and directing the fluid 4 onto the tank tube 28 or a wall 66.

In Fig. 4, a cut view onto the dividing plane of the two halves of housing part 76 is shown. Dividing the housing into parts 72 and 76 offers the benefit of being able to insert the bubble filter 44 in the lower part 72 before attaching it to the upper part 76. Thus, the opening of the passage 32 at the proximal end 46 can be smaller. Further, the dividing plane between the two halves of part 76 extends over only a part of the length of the passage 32. Thus, the dividing plane can be bridged more easily, e.g. by an adapter 78 which protrudes from the proximal end 46 and allows a fluid-tight connection directly between e.g. a discharge line 16 at the proximal end 46 and the part 72 in which the passage 32 is formed monolithically. The adapter 78 may seal off the passage 32 between the proximal end 46 and the part 72, so that no fluid may leak out of the dividing plane of the part 76.

As can be further seen from Fig. 4, the tank tube bracket 1 does not need to be fixed to the tank/pump interface 18. It may be sufficient to fix it onto the tank tube 28 so that the bracket 1 is spaced apart from the tank-pump interface 18.

In order to facilitate the discharge of the fluid from the distal end 34, a recess 80 may be provided where the housing 41 meets the distal end 34. This allows fluid to emanate above the distal end 34 and increases the attachment of the flow on the tank tube 28. At the lower end, a protrusion 82 which extends downwards may be provided to prevent dripping and to better guide the flow along the surface of the tank tube 28.

### REFERENCE NUMERALS

- 1: tank tube bracket
- 2: tank
- 4: fluid
- 6: suction line
- 8: pump
- 10: arrow
- 12: fluid consumer device
- 14: discharge outlet
- 16: discharge line
- 18: tank/pump interface
- 20: side of tank
- 22: cover of access opening
- 24: access opening of tank
- 26: vent tube
- 27: heating tube
- 28: tank tube
- 30: sensor device
- 32: passage
- 34: distal end of passage
- 36: fluid stream
- 38: axis of receptacle
- 40: receptacle
- 41: housing of bracket
- 42: fixing element
- 44: air bubble filter
- 46: proximal end of passage
- 48: straight section of passage at proximal end
- 50: straight section of passage at distal end
- 52: elbow of passage
- 54: arrow/entry direction
- 56: diameter of passage
- 58: material thickness of passage
- 60: bevel at distal end
- 62: gap between distal end of passage and tank tube
- 64: flow along tank tube
- 65: virtual extension of passage past distal end
- 66: wall of tank
- 68: form fit between bracket and tank tube
- 70: slot
- 72: part of housing
- 74: stiffening structure
- 76: part of housing
- 78: adapter for connection to discharge line
- 80: recess at distal end
- 82: protrusion at distal end

## Claims

1. Tank tube bracket (1) for a tank (2), in particular a diesel or reactive-fluid tank, the bracket (1) comprising a receptacle (40) for receiving a tank tube (28), the receptacle (40) extending along an axis (38), and a passage (32) for passing fluid (4) through the bracket (1) wherein the passage (32) is directed towards the axis (38) at a distal end (34) of the passage (32), **characterized in that** a tank tube (28) is received in the receptacle (40), the tank tube (28) extending in front of the distal end (34) of the passage (32).

2. Tank tube bracket (1) according to claim 1, wherein the tank tube (28) crosses a virtual linear extension (65) of the passage (32) past the distal end (34).

3. Tank tube bracket (1) according to claim 1 or 2, wherein the tank tube (28) is spaced apart from the distal end (34) less than one diameter (36) of the passage (32).

4. Tank tube bracket (1) according to any one of claims 1 to 3, wherein, in operation, a fluid flow (64) is provided exiting the distal end (34), the fluid flow (64) being at least partly attached to the tank tube (28) and being directed away from the receptacle (40).

5. Tank tube bracket (1) according to any one of claims 1 to 4, wherein the passage (32) comprises an elbow (52) between the distal end (34) and the proximal end (46) of the passage (32), the proximal end (46) being opposite the distal end (34).

6. Tank tube bracket (1) according to any one of claims 1 to 5, wherein the bracket (1) comprises a housing (41) which forms at least part of the receptacle (40) and the passage (32).

7. Tank tube bracket (1) according to claim 6, wherein the housing (41) constitutes a thermal bridge between the receptacle (40) and the passage (32).

8. Tank tube bracket (1) according to any one of claims 1 to 7, wherein the passage (32) comprises an air bubble filter (44).

9. Tank tube bracket (1) according to claim 8, wherein the air bubble filter (44) is located in and extends along a straight section (50) of the passage (32) between a proximal end (46) and an elbow (52) of the passage (32).

10. Fluid tank (2) such as a diesel or a reactive-fluid tank, in which a tank tube bracket (1) according to any one of claims 1 to 9 is located.

11. Fluid tank (2) according to claim 10, wherein a sensor device (30) is placed in the tank (2), the distal end (34) of the passage (32) pointing away from the sensor device (30).

12. Fluid tank (2) according to claim 10 or 11, wherein the distal end (34) of the passage (32) is not located vertically above the sensor device (30).

13. Fluid tank (2) according to any one of claims 10 to 12, wherein the proximal end (46) of the passage (32) is located vertically above the sensor device (30).

14. Assembly comprising a pump (8) and a tank tube bracket (1) according to any one of claims 1 to 9, wherein the passage (32) is connected to a discharge outlet (14) of the pump (8).

## Patentansprüche

1. Tankrohrhalterung (1) für einen Tank (2), insbesondere einen Diesel- oder Reaktivfluidtank, wobei die Halterung (1) umfasst: eine Aufnahme (40) zum Aufnehmen eines Tankrohres (28), wobei sich die Aufnahme (40) entlang einer Achse (38) erstreckt, und einen Durchlass (32) zum Leiten von Fluid (4) durch die Halterung (1), wobei der Durchlass (32) an einem distalen Ende (34) des Durchlasses (32) in Richtung der Achse (38) weist, **dadurch gekennzeichnet, dass** ein Tankrohr (28) in der Aufnahme (40) aufgenommen ist, wobei sich das Tankrohr (28) vor dem distalen Ende (34) des Durchlasses (32) erstreckt.

2. Tankrohrhalterung (1) nach Anspruch 1, wobei das Tankrohr (28) eine virtuelle lineare Verlängerung (65) des Durchlasses (32) hinter dem distalen Ende (34) kreuzt.

3. Tankrohrhalterung (1) nach Anspruch 1 oder 2, wobei das Tankrohr (28) von dem distalen Ende (34) weniger als ein Durchmesser (36) des Durchlasses (32) beabstandet ist.

4. Tankrohrhalterung (1) nach einem der Ansprüche 1 bis 3, bei dem im Betrieb eine Fluidströmung (64) vorgesehen ist, die aus dem distalen Ende (34) austritt, wobei die Fluidströmung (64) wenigstens teilweise zum Tankrohr (28) angebracht ist und von der Aufnahme (40) weg weist.

5. Tankrohrhalterung (1) nach einem der Ansprüche 1 bis 4, bei der der Durchgang (32) ein Kniestück (52) zwischen dem distalen Ende (34) und dem proximalen Ende (46) des Durchgangs (32) aufweist, wobei das proximale Ende (46) dem distalen Ende (34) gegenüberliegt.

6. Tankrohrhalterung (1) nach einem der Ansprüche 1 bis 5, wobei die Halterung (1) ein Gehäuse (41) aufweist, das wenigstens einen Teil der Aufnahme (40) und des Durchlasses (32) bildet.

7. Tankrohrhalterung (1) nach Anspruch 6, bei der das Gehäuse (41) eine Wärmebrücke zwischen dem Behälter (40) und dem Durchgang (32) bildet.

8. Tankrohrhalterung (1) nach einem der Ansprüche 1 bis 7, bei der der Durchgang (32) einen Luftblasenfilter (44) umfasst.

9. Tankrohrhalterung (1) nach Anspruch 8, bei der der Luftblasenfilter (44) in einem geraden Abschnitt (50) des Durchlasses (32) zwischen einem proximalen Ende (46) und einem Kniestück (52) des Durchgangs (32) angeordnet ist und sich entlang desselben erstreckt.

10. Fluidtank (2), wie etwa ein Diesel- oder ein Reaktivfluidtank, in dem sich eine Tankrohrhalterung (1) nach einem der Ansprüche 1 bis 9 befindet.

11. Fluidtank (2) nach Anspruch 10, bei dem eine Sensorvorrichtung (30) in dem Tank (2) angeordnet ist, wobei das distale Ende (34) des Durchlasses (32) von der Sensorvorrichtung (30) weg weist.

12. Fluidtank (2) nach Anspruch 10 oder 11, bei dem das distale Ende (34) des Durchlasses (32) nicht vertikal über der Sensorvorrichtung (30) angeordnet ist.

13. Fluidtank (2) nach einem der Ansprüche 10 bis 12, bei dem das proximale Ende (46) des Durchlasses (32) vertikal über der Sensorvorrichtung (30) angeordnet ist.

14. Baugruppe mit einer Pumpe (8) und einer Tankrohrhalterung (1) nach einem der Ansprüche 1 bis 9, wobei der Durchgang (32) mit einem Abgabeauslass (14) der Pumpe (8) verbunden ist.

## Revendications

1. Support de tube de réservoir (1) destiné à un réservoir (2), en particulier un réservoir de carburant diesel ou de fluide réactif, le support (1) comprenant un réceptacle (40) destiné à recevoir un tuyau de réservoir (28), le réceptacle (40) s'étendant le long d'un axe (38), ainsi qu'un passage (32) destiné à faire passer le fluide (4) au travers du support (1), le passage (32) étant dirigé vers l'axe (38) à une extrémité distale (34) du passage (32), **caractérisé en ce qu'un** tuyau de réservoir (28) est reçu dans le réceptacle (40), le tuyau de réservoir (28) s'étendant en face de l'extrémité distale (34) du passage (32) .

2. Support de tube de réservoir (1) selon la revendication 1, dans lequel le tuyau de réservoir (28) croise une extension linéaire virtuelle (65) du passage (32) au-delà de l'extrémité distale (34).

3. Support de tube de réservoir (1) selon la revendication 1 ou la revendication 2, dans lequel le tuyau de réservoir (28) est espacé de l'extrémité distale (34) de moins d'un diamètre (36) du passage (32).

4. Support de tube de réservoir (1) selon l'une quelconque des revendications 1 à 3, dans lequel, en service, un écoulement de fluide (64) est prévu sortir de l'extrémité distale (34), l'écoulement de fluide (64) étant au moins en partie attaché au tuyau de réservoir (28) et étant dirigé à distance du réceptacle (40).

5. Support de tube de réservoir (1) selon l'une quelconque des revendications 1 à 4, dans lequel le passage (32) comprend un coude (52) entre l'extrémité distale (34) et l'extrémité proximale (46) du passage (32), l'extrémité proximale (46) étant opposée à l'extrémité distale (34).

6. Support de tube de réservoir (1) selon l'une quelconque des revendications 1 à 5, le support (1) comprenant un carter (41) qui forme au moins une partie du réceptacle (40) et du passage (32).

7. Support de tube de réservoir (1) selon la revendication 6, dans lequel le carter (41) constitue un pont thermique entre le réceptacle (40) et le passage (32).

8. Support de tube de réservoir (1) selon l'une quelconque des revendications 1 à 7, dans lequel le passage (32) comprend un filtre à bulles d'air (44).

9. Support de tube de réservoir (1) selon la revendication 8, dans lequel le filtre à bulles d'air (44) est situé dans une section droite (50) du passage (32) et s'étend dans celle-ci entre une extrémité proximale (46) et un coude (52) du passage (32).

10. Réservoir de fluide (2) tel qu'un réservoir pour un carburant diesel ou un fluide réactif, dans lequel est situé le support de tube de réservoir (1) conforme à l'une quelconque des revendications 1 à 9.

11. Réservoir de fluide (2) selon la revendication 10, dans lequel un dispositif de capteur (30) est placé dans le réservoir (2), l'extrémité distale (34) du passage (32) étant dirigée à l'opposé du dispositif de capteur (30).

12. Réservoir de fluide (2) selon la revendication 10 ou la revendication 11, dans lequel l'extrémité distale (34) du passage (32) n'est pas située verticalement au-dessus du dispositif de capteur (30).

13. Réservoir de fluide (2) selon l'une quelconque des revendications 10 à 12, dans lequel l'extrémité proximale (46) du passage (32) est située verticalement au-dessus du dispositif de capteur (30).

14. Ensemble comprenant une pompe (8) et un support de tube de réservoir (1) conforme à l'une quelconque des revendications 1 à 9, dans lequel le passage (32) est raccordé à un orifice de sortie d'évacuation (14) de la pompe (8) .
